## Europäisches Patentamt

## European Patent Office

## Office européen des brevets

(19)

(11) Publication number: **0 030 777**
**B2**

(12)

# NEW EUROPEAN PATENT SPECIFICATION

(45) Date of publication of the new patent specification: **18.09.85**

(21) Application number: **80301998.3**

(22) Date of filing: **13.06.80**

(51) Int. Cl.⁴: **C 04 B 7/44, F 28 D 15/00**

(54) Plant for and method of manufacturing cement clinker.

(30) Priority: **12.12.79 GB 7942891**

(43) Date of publication of application:
**24.06.81 Bulletin 81/25**

(45) Publication of the grant of the patent:
**18.09.85 Bulletin 85/38**

(45) Mention of the opposition decision:
**02.03.83 Bulletin 83/09**

(84) Designated Contracting States:
**BE DE FR GB IT LU NL SE**

(56) References cited:
**DE-A-2 007 539**
**DE-C-1 471 115**
**GB-A-2 004 635**
**US-A-4 071 309**

(73) Proprietor: **F.L. Smidth & Co. A/S**
**77 Vigerslev Alle**
**DK-2500 Valby Copenhagen (DK)**

(72) Inventor: **Houd, Rolf Dietrich**
**c/o, F.L. Smidth & Co. A/S. 77, Vigerslev Alle**
**DK-2500 Valby Copenhagen (DK)**
Inventor: **Knudsen, Hans Brun**
**c/o, F.L. Smidth & Co. A/S. 77, Vigerslev Alle**
**DK-2500 Valby Copenhagen (DK)**

(74) Representative: **Brunner, Michael John et al**
**GILL JENNINGS & EVERY 53-64 Chancery Lane**
**London WC2A 1HN (GB)**

Courier Press, Leamington Spa, England.

## Description

The invention relates to a plant for a method of manufacturing cement clinker from cement raw material which is burnt in a kiln, the plant comprising a multi-stage preheater in which raw material is heated, in use, by hot gases. Such a plant is hereinafter referred to as of the kind described.

Known plants of the above kind may comprise several cyclone stages in succession through which pass the hot gases which may be exit gases from, for example a calciner and/or the kiln. Raw meal is supplied to the first cyclone stage and passed counter-currently to the hot exit gases down through the cyclone preheater to the calciner from where the precalcined raw meal is fed via a cylone separator to the kiln. Combustion air for the calciner may, for example, be supplied from a clinker cooler coupled after the kiln.

Preheating of the raw material in the preheater is effected by contact and thus direct heat transfer between the raw material and the exit gases.

If such a cyclone preheater, with direct contact between the raw material and the exit gases, is used for preheating raw material with volatile, combustible components, there will be a risk of explosion when the combustible components have been expelled from the raw material and are absorbed in the exit gases. In addition, the heating performance of the expelled gases is lost.

DE—B—1471115 discloses the preheating of cement raw meal, by exit gases from a burning step, in an indirect heat exchanger. However, the purpose of this indirect heat exchange is either to postpone combustion of a combustible component mixed with the raw material or to avoid transfer to the raw material of alkali components from the exit gases. Consequently the indirect heat exchanger is shown as having merely an inlet and an outlet for the raw material and an inlet and an outlet for the exit gases. This ignores, and provides no solution to, the problem of dangerous expulsion of volatile combustible components from the raw material.

It is an object of the invention to overcome these problems and in accordance with the present invention, a plant of the kind described, in which at least the first stage of the preheater comprises a heat exchanger having a raw material section with an inlet and an outlet for raw material; a separate hot gas section; and means for enabling indirect heat transfer between the hot gas section and the raw material section; is characterised in that the raw material section has a separate outlet for volatile combustible components expelled from the raw material.

The hot gases will normally be the exit gases from the kiln and/or calciner, but may be hot air from the cooler depending on the design of the plant.

The invention also includes a method of manufacturing cement clinker form cement raw material in which the raw material is preheated by hot gases in a multi-stage preheater, in a first stage of which the raw material is passed in a first stream through a heat exchanger, the hot gases passing through the heat exchanger in a seperate stream to transfer heat indirectly to the raw material, characterised in that the raw material contains volatile combustible components which are expelled from the raw material in the heat exchanger, and in that the raw material and volatile combustible components leave the heat exchanger through separate outlets.

Since the hot gases are kept separate from the raw material during the expulsion of any volatile, combustible components of the raw material, the hot gases do not become explosive, and in addition do not contain components which may cause air pollution. Furthermore, the volatile, combustible components expelled from the raw material can be utilized in the kiln of the calciner as additional fuel instead of being wasted.

Preferably, the raw material section and the hot gas section each comprise a chamber, the chambers being separated by a partition. Heat pipes may extend through the partition between the chambers to transfer heat from the hot gas chamber to the raw material chamber.

Such heat-pipes are known and may, in their simplest form, be lengths of pipes closed at both ends, and containing a fluid capable of evaporating and condensing. The fluid will take up heat and evaporate at the comparatively hot end of each pipe and then condense giving up heat at the comparatively cold end. The condensed fluid is then returned to the hot end of the pipe. For this purpose, the pipes may be slightly inclined with the end of each pipe in the hot gas chamber being lowermost.

The hot gas chamber of the heat exchanger may contain a granular, heat-resistant material for the formation of an expanded fluidized-bed made fluid by means of the hot gases passing through, thereby improving the heat transfer from the hot gases to the heat-pipes.

Because of the raw material flowing downwards in the raw material chamber of the heat exchanger, fluidized-bed like conditions are already present in this chamber, which gives effective heat transfer from the heat-pipes to the raw material.

An example of a plant in accordance with the present invention will now be described with reference to the accompanying diagrammatic drawing of the plant.

The plant shown comprises a heat exchanger 1, two preheater cyclones 2, 3 a separating cyclone 4, a calciner 5 and a rotary kiln 8.

Raw material is fed to the heat exchanger 1 through an inlet 6, and is then fed via the cyclones 2, 3, to a raw material inlet 7 of the calciner 5, through the calciner 5 to the separating cyclone 4, and thence to the rotary kiln 8.

In the example shown, the hot exit gases come from the calciner 5, which is supplied with combustion air from a clinker cooler (not shown) through a pipe 9, and are drawn up through the cylcones 4, 3, 2 and the heat exchanger 1 by a fan 10.

The calciner 5 is supplied with fuel at 11.

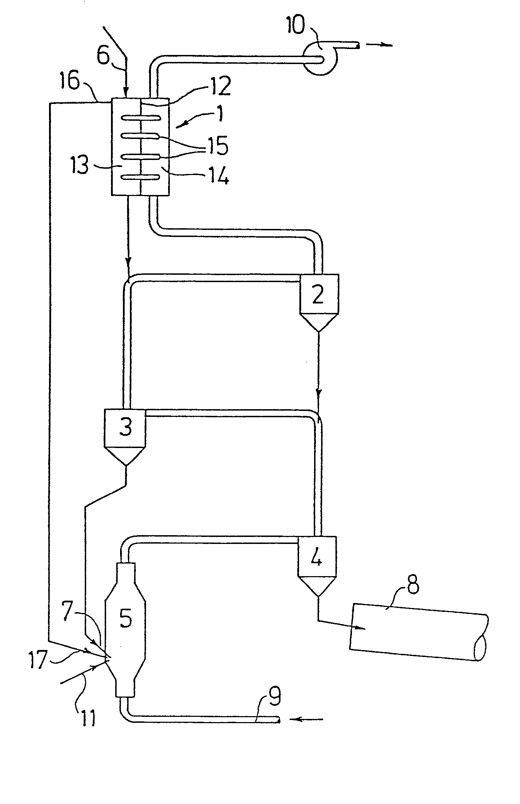

The heat exchanger 1 is divided by a partition wall 12 into two chambers 13, 14, raw meal only flowing through the chamber 13 to the left on the drawing — and exit gases only flowing through the other chamber 14 — to the right on the drawing.

For heat transfer between the two chambers 13 and 14, the chambers are interconnected by means of heat-pipes 15 extending through the partition wall 12 and projecting into each chamber.

These heat-pipes 15 may be of more or less advanced types, but in their simplest form they are lengths of pipes closed at both ends, and containing a medium partly in the form of liquid, partly in the form of vapour. The liquid takes up heat and evaporates in the pipe ends located in the comparatively hot exit gas chamber 14, and the vapour then condenses giving up heat at the pipe ends located in the comparatively cold raw material chamber 13. Thus heat is transferred from the chamber 14 to the chamber 13.

To facilitate the return of condensate in the pipes from the chamber 13 to the chamber 14, the heat-pipes 15 may be slightly downwardly inclined towards the chamber 14.

By heating the raw meal in the chamber 13 any volatile, combustible components are expelled from the raw material, and in this example pass out of the heat exchanger at 16, and hence down to and, at 17, into the calciner 5 where the components are utilized as additional fuel. Thus, the volatile combustible components are not wasted and the risk of explosion caused by the components being mixed with the exit gases is prevented.

When the raw material has been cleaned of volatile components, it passes from the heat exchanger 1 in a known manner to the next cyclone stage 2 where it comes into direct contact with the exit gases.

In the left chamber 13 of the heat exchanger 1 the raw material is in a fluidized-bed like state, partly because it cascades onto the heat-pipes 15, and partly because of the expulsion of volatile components, and this provides for improved heat transfer from the heat-pipes 15 to the raw material.

Similarly improved heat transfer from the exit gases to the heat-pipes 15 can be obtained in the right chamber 14 of the heat exchanger 1 by means of a granular, heat-resistant material in the chamber 14, through which the exit gases flow, and by means of which the material forms an expanded fluidized-bed. The word expanded is used in its usual sense in this context to indicate a fluidized-bed in which there are gas inclusions which increase the height of or "expand" the bed.

## Claims

1. A plant for manufacturing cement clinker from cement raw material which is burnt in a kiln (8), the plant comprising a multi-stage preheater (1,2,3) in which raw material is heated, in use, by hot gases, at least the first stage of the preheater comprising a heat exchanger (1) having a raw material section (13) with an inlet (6) and an outlet for raw material; a separate hot gas section (14); and means (12, 15) for enabling indirect heat transfer between the hot gas section (14) and the raw material section (13); characterised in that the raw material section (13) has a separate outlet (16) for volatile combustible components expelled from the raw material.

2. A plant according to claim 1, characterised in that the raw material section (13) and hot gas section (14) each comprise a chamber, the chambers being separated by a partition (12).

3. A plant according to claim 2, characterised in that heat pipes (15) extend through the partition (12), between the chambers (13,14), to transfer heat from the hot gas chamber (14) to the raw material chamber (13).

4. A plant according to claim 3, characterised in that the heat pipes (15) are slightly inclined, with the end of each pipe in the hot gas chamber being lowermost.

5. A plant according to any of the preceding claims, characterised in that the hot gas section (14) contains a granular heat-resistant material for the formation, in use, of an expanded fluidized-bed with the hot gases.

6. A method of manufacturing cement clinker from cement raw material in which the raw material is preheated by hot gases in a multi-stage preheater (1,2,3), in a first stage of which the raw material is passed in a first stream through a heat exchanger (1), the hot gases passing through the heat exchanger (1) in a separate stream to transfer heat indirectly to the raw material; characterised in that the raw material contains volatile combustible components which are expelled from the raw material in the heat exchanger (1), and in that the new material and volatile combustible components leave the heat exchanger (1) through separate outlets.

7. A method according to claim 6, wherein heat transfer is by means of heat-pipes (15) extending between the streams of raw material and hot gases.

8. A method according to claim 6 or claim 7, wherein the hot gases form a fluidized-bed with a heat-resistant granular material, in the heat exchanger (1).

## Patentansprüche

1. Anlage zur Herstellung von Zementklinker aus Zementrohmaterial, das in einem Ofen (8) gebrannt wird, welche Anlage über einen mehrstufigen Vorwärmer (1,2,3) verfügt, in dem Rohmaterial im Betrieb mittels heißer Gase erwärmt wird, wobei mindestens die erste Stufe des Vorwärmers in einem Wärmetauscher (1) mit einer Rohmaterialsektion (13) mit einem Einlaß (6) und

# 0 030 777

eiem Auslaß für Rohmaterial, einer separaten Heißgassektion (14) und Mitteln (12, 15) besteht, die eine indirekte Wärmeübertragung zwischen der Heißgassektion (14) und der Rohmaterialsektion (13) ermöglichen, dadurch gekennzeichnet, daß die Rohmaterialsektion (13) einen separaten Ausgang (16) für aus dem Rohmaterial ausgateriebene flüchtige, brennbare Komponenten aufweist.

2. Anlage nach Anspruch 1, dadurch gekennzeichet, daß die Rohmaterialsektion (13) und die Heißgassektion (14) je in einer Kammer bestehen, die mittels einer Trennwand (12) voneinander getrennt sind.

3. Anlage nach Anspruch 2, dadurch gekennzeichnet, daß sich Heizrohre (15) durch die Trennwand (12) hindurch zwischen den Kammern (13, 14) erstrecken, um Wärme von der Heißgaskammer (14) an die Rohmaterialkammer (13) zu überführen.

4. Anlage nach Anspruch 3, dadurch gekennzeichnet, daß die Heizrohre (15) schwach geneigt sind, wobei das Ende jedes Rohrs in der Heißgaskammer am tiefsten ist.

5. Anlage nach einem der vorhergehenden Ansprüche, dadurch gekennzeichnet, daß die heißgassektion (14) ein granulatförmiges, hitzefestes Material für die Bildung eines expandierten Fluidbettes mit den heißen Gasen während des Betriebs ent hält.

6. Verfahren zur Herstellung von Zementklinker aus Zementrohmaterial, bei welchem das Rohmaterial mittels heißer Gase in einem mehrstufigen Vorwärmer (1, 2, 3) vorerwärmt wird, in einer ersten Stufe des Vorwärmer das Rohmaterial in einem ersten Strom durch einen Wärmetauscher (1) geführt wird, während die heißen Gase durch den Wärmetauscher (1) in einem separaten Strom geführt werden, um indirekt Wärme an das Rohmaterial zu übertragen, dadurch gekennzeichnet, daß das Rohmaterial flüchtige, brennbare Komponenten enhält, die aus dem Rohmaterial in dem Wärmetauscher (1) ausgetrieben werden, und daß das Rohmaterial und die flüchtigen, brennbaren Komponenten den Wärmetauscher (1) über separate Auslässe verlassen.

7. Verfahren nach Anspruch 6, dadurch gekennzeichnet, daß die Wärmeübertragung eine solche unter Zuhilfenahme von Heizrohren (15) ist, die sich zwischen den Strömen des Rohmaterials und der Heißgase erstrecken.

8. Verfahren nach Anspruch 6 oder 7, dadurch gekennzeichnet, daß die Heißgase ein Fluidbett mit einem hitzefesten, granulatförmigen Material im Wärmetauscher (1) bilden.

**Revendications**

1. Installation pour fabriquer du clinker de ciment à partir de matiéres brutes qui sont calcinées dans un four (8), cette installation comprenant un préchauffeur à plusieurs étages ([1, 2, 3] dans lequel les mattiéres brutes sont chaffées, en service, par des gaz chauds, au moins le premier étage du préchauffeur comprenant un échangeur de chaleur (1) ayant un tronçon (13) recevant les matières brutes, avec une entrée (6) et une sortie des matières brutes; un tronçon séparé (14) pour les gaz chauds; et des moyens (12, 15) permettant un transfer de chaleur indirect entre le troçon (14) des gaz chauds et le tronçon (13) des matières brutes, installation caractérisée en ce que le tronçon (13) des matières brutes comporte une sortie (16) séparée destinée aux composants combustibles voltils expulsés des matières brutes.

2. Installation selon la revendication I, caractérisée en ce que le tronçon (13) des matières brutes et le tronçon (14) des gaz chauds consistent respectivement en une chambre, ces chambres étant séparées par une cloison (12).

3. Installation selon la revendication 2, caractérisée en ce que des conduits (15) de chaleur s'étendent, en traversant la cloison (12), entre les deux chambres (13, 14) afin de transférer de la chaleur de la gaz chambre (14) des gs chauds à la chambre (13) des matières brutes.

4. Installation selon la revendication 3 charactérisée en ce que les conduits (15) de chaleur sont légèrement inclinés, l'extrémité de chaque conduit dans la chambre des gaz chauds étant la plus basse.

5. Installation selon l'une quelconque des revendications précédentes, caractérisée en ce que le tronçon (14) des gas chauds contient une matière granulair résistant à la chaleur en vue de la formation, en service, d'un lit fluidisé expansé lors du passage des gaz chauds.

6. Procédé pour produire du clinker à partir de matières brutes pour le ciment, dans lequel on préchauffe les matiéres brutes au moyen de gaz chauds dans un préchauffeur à plusieurs étages (1, 2, 3), dans un premier étage duquel, on fait passer les matières brutes sous forme d'un premier courant dans l'échangeur (1) de chaleur, les gaz chauds traversant cet échangeur (1) de chaleur sous la forme d'un courant séparé afin de transférer indirectement de la chaleur à la matière brute, procédé caractérisé en ce que la matière brute contient des composants combustibles volatils qui sont expulsés de la matière brute dans l'échangeur (1) de chaleur, et en ce que la matière brute et les composants combustibles volatils quittent par des sorties séparées l'échanguer (1) de chaleur.

7. Procédé selon la revendication 6, caractérisée en ce qu'on effectue le transfert de chaleur au moyen de conduits (15) de chaleur s'étendant entre les courants de matières brutes et de gaz chauds.

8. Procédé selon la revendication 6 ou 7, caractérisé en ce que les gaz chauds forment un lit fluidisé avec une matiére granulair résistant à la chaleur, dans l'échangeur (1) de chaleur.